# FASCICULE DE BREVET EUROPEEN

(11) **EP 0 842 757 B1**
(45) Date de publication et mention de la délivrance du brevet: **13.02.2002**
(21) Numéro de dépôt: 97119664.7
(22) Date de dépôt: 10.11.1997
(51) Int. Cl.: B29C 70/22, B29C 70/30, B60B 5/02

(54) **Procédé et dispositif de fabrication de preforme de jante**
Verfahren und Vorrichtung zum Herstellen der Vorform einer Felge
Method and apparatus for producing a rim preform

(30) Priorité: 15.11.1996 FR 9614055
(43) Date de publication de la demande: 20.05.1998
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Finck, François, 63100 Clermont-Ferrand (FR); Vernet, Yves, 63800 Cournon-D'Auvergne (FR)
(74) Mandataire: Dequire, Philippe Jean-Marie Denis

(56) Documents cités:
- FR-A- 2 582 254
- FR-A- 2 595 621
- US-A- 4 273 601
- US-A- 4 749 235
- US-A- 4 779 347
- US-A- 5 073 315
- PATENT ABSTRACTS OF JAPAN vol. 012, no. 292 (M-729), 10 août 1988 & JP 63 068401 A (MITSUBISHI RAYON CO LTD), 28 mars 1988,

## Description

La présente invention concerne la fabrication de structures de renfort pour pièces en matériau composite, et plus particulièrement pour des roues, des jantes ou des éléments de jantes.

De nombreux procédés existent pour réaliser des roues ou des jantes en matériau composite. On peut citer, notamment, le moulage par injection à haute pression de résines thermoplastiques renforcées ou le moulage par compression de résines thermodurcissables renforcées elles aussi.

Ces techniques nécessitent l'emploi de fibres discontinues, ce qui entraîne des propriétés mécaniques des produits finis moyennes ainsi que leur optimisation mécanique délicate en raison des déplacements des fibres de renfort au cours du moulage.

Lorsque l'on désire employer des fibres continues, on peut choisir un tissu existant. Plus industriellement, on peut aussi choisir le procédé de fabrication de pièces composites appelé « R.T.M. » (moulage par transfert de résine) ou tout procédé dérivé. Dans ce procédé, les matériaux de renfort, tels des fibres de verre, de carbone ou de tout autre type, sont prédisposés dans la cavité d'un moule. Ces matériaux de renfort forment ainsi la « préforme » de la pièce composite finale. Cette opération de mise en place et de structuration des renforts s'appelle le « préformage ». La résine est ensuite transférée à travers la préforme dans le moule sous vide et/ou avec une pression de transfert puis réticulée aux températures appropriées.

Dans le cas de fabrications industrielles, pour optimiser l'utilisation des moules d'injection, on peut préparer les préformes en dehors du moule d'injection. Les préformes sont dans ce cas souvent rigidifiées, par un liant thermoplastique par exemple, pour faciliter leur mise en place dans les moules d'injection.

La réalisation de la préforme est une étape critique dans le procédé R.T.M., particulièrement pour des formes complexes comportant de fortes concavités, ce qui est le cas des jantes de roues.

Le brevet FR2595621 propose de fabriquer une préforme de révolution pour une pièce en matériau composite, par mise en place sur une matrice de préformage dont la forme est semblable à celle de la structure à fabriquer, d'une texture fibreuse à mailles déformables, tissu ou tresse, de manière à épouser la forme de la matrice de préformage par auto-adaptation des mailles. Le procédé consiste à mettre en place la texture fibreuse sur la matrice de préformage à une extrémité axiale de cette matrice de préformage, avec les mailles ayant des côtés d'inclinaisons opposées par rapport à la direction axiale de la structure, puis à mettre en place progressivement la texture fibreuse sur la matrice de préformage en direction de l'autre extrémité en soumettant la texture à une tension dans cette direction axiale.

Ce procédé conduit à une orientation symétrique des fibres de renfort d'un tissu relativement à la direction axiale de la structure, ce qui ne convient pas dans le cas de jantes de roues pour lesquelles il est souhaitable d'obtenir une orientation circonférentielle et axiale des fibres de renfort.

La demande de brevet européen EP0327173 présente une solution pour réaliser des préformes de roues composites par enroulement de fibres continues axialement puis circonférentiellement. Mais ce procédé est lent et nécessite un coût d'équipement élevé.

L'objet de l'invention est de présenter une autre technique simple de réalisation d'une préforme de jante à partir de fibres pré-assemblées. Une structure de fibres pré-assemblées peut être un tissu par exemple. Un tel tissu est constitué de fibres de chaîne et de trame assemblées par tissage.

Pour réaliser une préforme avec un tel tissu, l'usage est d'appliquer les fibres de chaîne et de trame dans les directions de renforcement mécanique souhaitées, ici les directions axiale et circonférentielle. Dans ces conditions, l'application directe du tissu sur une surface comportant de fortes concavités comme une jante entraîne l'apparition de plis : le préformage est irréalisable.

L'invention est un procédé de fabrication d'une préforme de jante ou d'élément de jante ayant un axe de révolution par mise en place de fibres pré-assemblées selon deux directions définissant des mailles déformables sur une matrice de préformage dans lequel :
- on enroule une laize desdites fibres pré-assemblées autour d'une forme de révolution pour obtenir un enroulement avec un nombre de couches de fibres pré-assemblées donné ;
- on fixe ledit enroulement sur une circonférence de plus grand diamètre de la matrice de préformage de telle sorte que les fibres sont disposées relativement à l'orientation axiale selon une première orientation d'angle alpha et une seconde orientation d'angle bêta inférieur à alpha ; et
- on applique ledit enroulement progressivement jusqu'à couvrir la totalité de la surface de la matrice de préformage en le soumettant à des tensions d'orientation sensiblement circonférentielle et de direction telle que lesdites tensions tendent à augmenter ledit angle alpha.

L'angle alpha d'inclinaison des premières fibres de renfort de la laize du tissu est de préférence compris entre soixante cinq et quatre vingt cinq degrés.

Le procédé de fabrication d'une préforme de jante selon l'invention a l'avantage de conduire à des orientations des fibres de renfort de la préforme proches des directions axiale et circonférentielle de la structure.

De préférence, après avoir appliqué l'enroulement de la laize sur la totalité de la matrice de préformage, on compacte cet enroulement contre la matrice de préformage par application d'une pression radiale. Cette étape a l'avantage d'augmenter la teneur en fibres de renfort de la pièce composite finie, ce qui améliore ses propriétés mécaniques.

L'invention a aussi pour objet un dispositif de fabrication d'une préforme de jante ou d'élément de jante comprenant :
- une matrice de préformage de profil extérieur de révolution correspondant au profil intérieur de ladite préforme ;
- des moyens de fixation sur une circonférence de plus grand diamètre de ladite matrice de préformage d'un enroulement d'une laize de fibres pré-assemblées selon deux orientations définissant des mailles déformables ;
- des moyens d'application dudit enroulement en le soumettant à des tensions dans une direction sensiblement circonférentielle.

Avantageusement, les moyens d'application de l'enroulement comprennent :
- un patin d'application avec une surface d'application destinée à venir en contact avec l'enroulement sur un secteur donné, ladite surface d'application ayant une zone d'entrée avec un profil axial d'entrée dont le diamètre minimum est au moins supérieur au plus grand diamètre extérieur de ladite préforme, une zone de sortie avec un profil axial de sortie correspondant au profil final extérieur de ladite préforme et une zone de transition avec un profil axial évoluant progressivement circonférentiellement dudit profil axial d'entrée vers ledit profil axial de sortie ;
- des moyens de maintien et de mise en rotation relative de la matrice de préformage et dudit patin d'application ; et
- des moyens de mise en appui dudit patin d'application contre ledit secteur dudit enroulement.

Dans un mode de réalisation préférentiel, l'évolution circonférentielle d'un profil circonférentiel de la zone de transition de la surface d'application du patin est d'autant plus rapide que ledit profil circonférentiel est axialement proche de la circonférence de plus grand diamètre où doit être fixé initialement l'enroulement.

Un mode de réalisation de l'invention est maintenant décrit, à titre non limitatif, avec l'aide des dessins annexés suivants :
- la figure 1 présente une préforme de jante ;
- la figure 2 représente un tissu de renfort ;
- la figure 3 illustre la déformabilité d'un tissu tel celui de la figure 2 ;
- la figure 4 présente une laize de tissu ;
- la figure 5 présente une matrice de préformage ;
- la figure 6 est un schéma illustrant un dispositif d'application ;
- la figure 7 présente une vue de côté du dispositif d'application de la figure 6 ;
- la figure 8 est une vue de côté d'un patin d'application ;
- les figures 9 (a), (b), (c) représentent trois sections droites du patin d'application de la figure 8 ;
- la figure 10 illustre un perfectionnement au dispositif d'application.

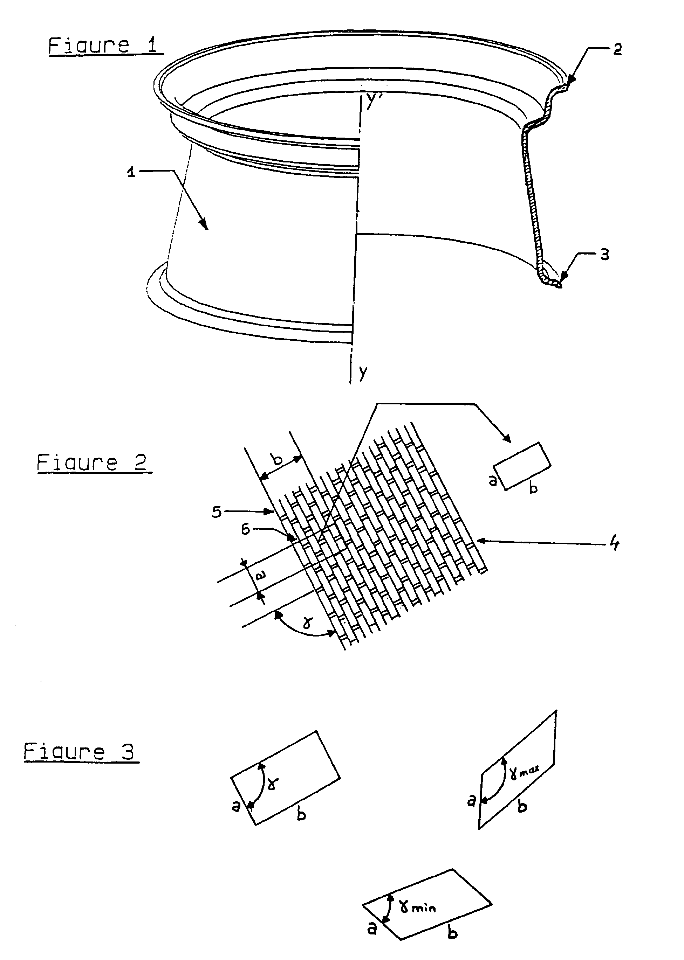

La préforme 1 de jante présentée à la figure 1 est constituée de plusieurs couches de tissu superposées avec leurs fibres de chaîne et de trame disposées sensiblement selon les directions axiales et circonférentielles comme on va le voir ci-après. Cette préforme a un axe de révolution YY'. Ses deux extrémités axiales sont les crochets avant 2 et arrière 3.

La difficulté de réalisation d'une telle préforme 1 de jante est liée aux fortes variations de longueur des rayons sur sa section droite.

Un exemple de tissu 4 destiné à réaliser une préforme 1 est représenté à la figure 2. Ce tissu 4 est constitué de fibres de trame 5 et de chaîne 6 qui font entre elles un angle γ. On peut considérer qu'un tel tissu 4 est constitué de mailles élémentaires de côtés a et b. Ces longueurs a et b correspondent à la distance séparant respectivement deux fibres de trame 5 et de chaîne 6 placées dans la même configuration de tissage. Lorsque le tissu 4 est tractionné dans une direction différente de celles des fibres de trame 5 et de chaîne 6, chaque maille élémentaire du tissu 4 se déforme comme un parallélogramme : les longueurs a et b restent constantes, mais l'angle γ varie. Les limites maximale et minimale de γ peuvent être mesurées expérimentalement : γₘₐₓ et γₘᵢₙ (figure 3). Les tissus utilisés dans le procédé de l'invention ont préférentiellement des angles gamma de l'ordre de 90 degrés. On peut aussi utiliser des tissus avec des valeurs de γ s'écartant de 90 degrés de +/- 30 degrés.

On appelle « laize », une bande de tissu 4 constituée de fibres orientées selon les angles alpha et bêta relativement à la largeur de la laize, et coupée à une largeur correspondant à une jante donnée. La figure 4 présente une telle laize 7 prête à être appliquée sur une matrice de préformage. Cette laize 7 est obtenue par découpe en biais d'un tissu 4 relativement aux directions des fils de chaîne 6 et de trame 5 du tissu 4. Dans le cas de la figure 4, la découpe est effectuée avec un biais correspondant à un angle ω égal à π/2 - α relativement à la direction des fils de chaîne 6 du tissu 4. De préférence, cet angle ω est compris entre 10 et 25 degrés.

Lors de son enroulement sur la matrice de préformage, l'axe D'D correspond à la direction circonférentielle et l'axe X'X à la direction axiale.

On peut aussi effectuer cette découpe en biais relativement aux fils de trame.

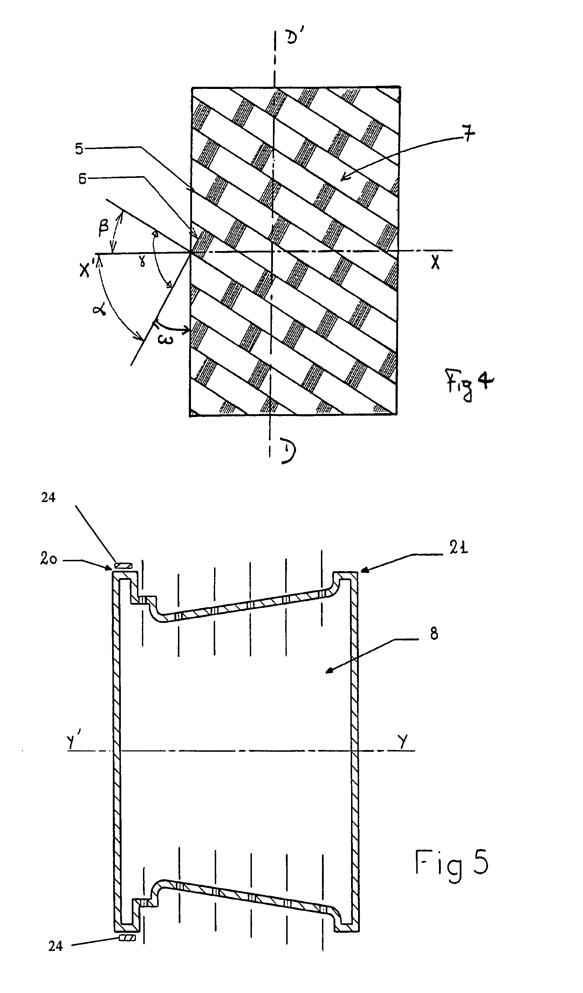

La première étape de la réalisation d'une préforme consiste à enrouler cette laize 7 sur une forme de révolution, par exemple une virole cylindrique, jusqu'à l'obtention d'un nombre de couches de fibres donné. De préférence, le diamètre extérieur de cette virole cylindrique est identique au plus grand diamètre de la matrice de préformage 8 (voir figure 5), mais ce n'est pas obligatoire. Lorsque le diamètre de cette virole est différent de celui de la matrice 8, on peut le ramener à celui de la matrice 8 par extension radiale (augmentation du diamètre de l'enroulement) ou extension axiale (diminution du diamètre de l'enroulement). Cette étape intermédiaire peut être utile pour modifier les angles d'orientation des fibres pré-assemblées.

La figure 5 présente une matrice de préformage 8. Cette matrice 8 a aussi un axe de révolution YY' et a un profil radialement extérieur correspondant au profil intérieur de la préforme 1 à fabriquer. Ses extrémités axiales 20 et 21 correspondent aux crochets avant 2 et arrière 3 de la préforme 1. Ce sont ces extrémités axiales qui présentent les diamètres extérieurs les plus grands. En conséquence, c'est sur l'une de ces extrémités, par exemple celle 20 que va être fixé initialement circonférentiellement l'enroulement au moyen, par exemple d'une frette 24.

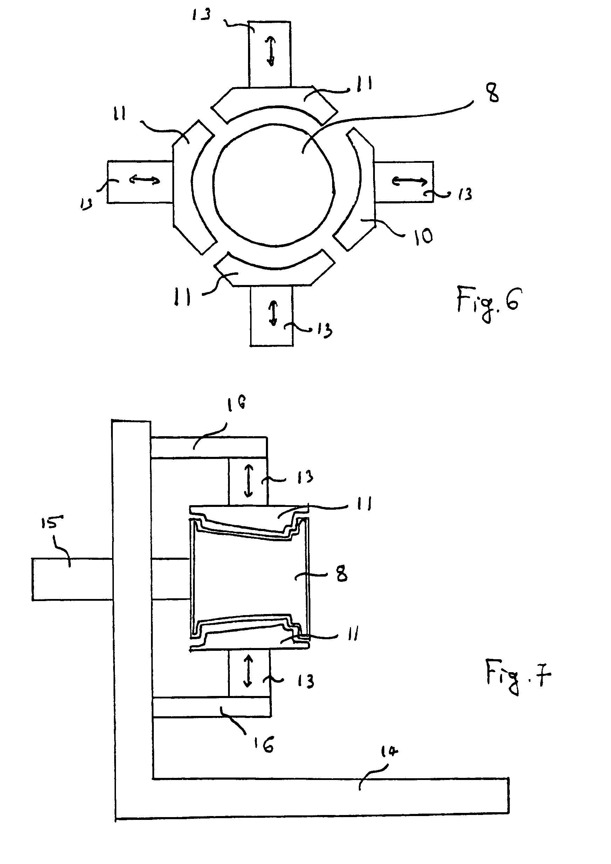

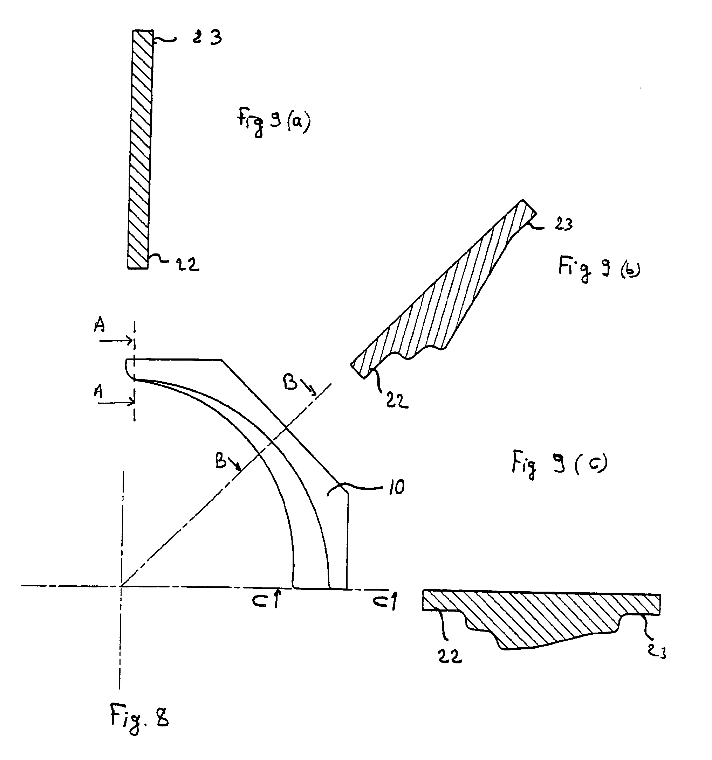

Un dispositif d'application d'un enroulement sur une matrice de préformage 8 est présenté schématiquement aux figures 6 et 7. A la figure 6, on voit de face une matrice de préformage 8, un patin d'application 10 et trois patins de compactage 11. Les patins d'application 10 et de compactage 11 sont maintenus par des vérins 13 et peuvent ainsi se déplacer radialement pour venir s'appuyer contre un secteur correspondant de la préforme de jante 1. La matrice de préformage 8 est fixée à un bâti 14 et peut être entraîné en rotation par un moteur 15. Les vérins 13 sont fixés au bâti 14 par les supports 16. Pour faciliter l'évacuation des préformes après leur fabrication, la matrice de préformage 8 peut avantageusement être constituée de deux parties séparables dans le plan circonférentiel de diamètre minimum.

Comme on le voit à la figure 7, les patins de compactage 11 ont une surface d'application contre la préforme 1 dont le profil axial correspond au profil axial extérieur de la préforme 1 à fabriquer.

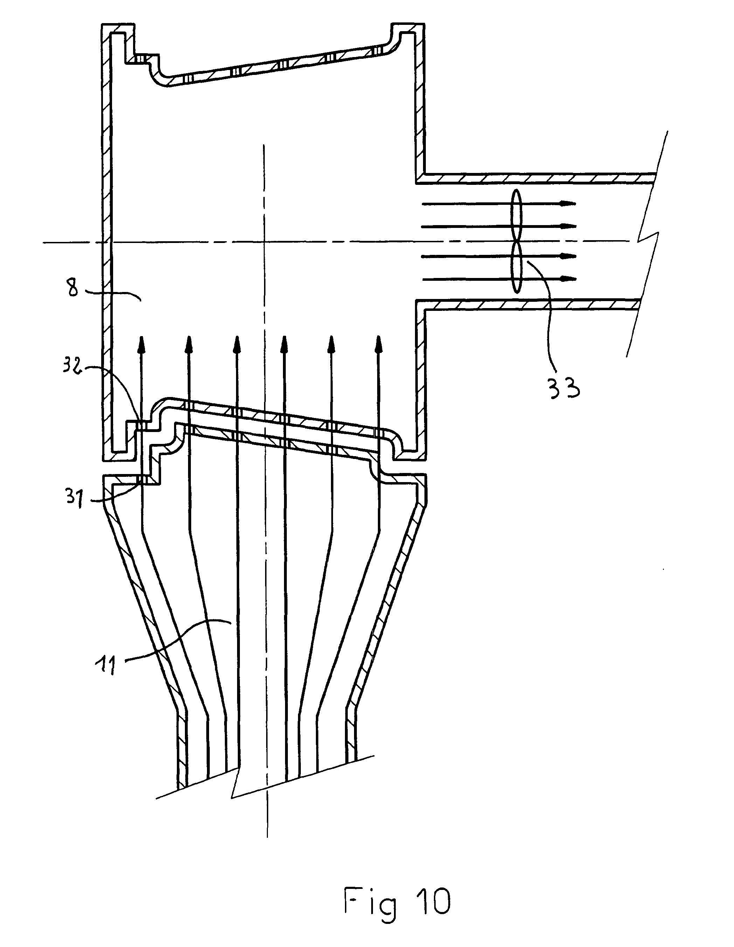

A la figure 8 est représentée une vue de côté du patin d'application 10. Ce patin 10 comprend circonférentiellement trois zones, une zone d'entrée, une zone de transition et une zone de sortie. Les figures 9 présentent trois sections droites du patin d'application 10 correspondant respectivement aux coupes AA, BB et CC tel qu'indiqué à la figure 8, dans lesquelles les repères 22 et 23 indiquent les zones destinées à venir en application contre les zones correspondantes 20 et 21 de la matrice de préformage 8. La figure 9 (a) présente une section droite de la zone d'entrée selon la coupe AA de la figure 8, le profil axial de la surface d'application dans cette zone a un diamètre supérieur ou égal au plus grand diamètre extérieur de la préforme 1 à fabriquer. La figure 9 (c) présente une section droite de la zone de sortie selon la coupe CC de la figure 8. Cette section droite a un profil axial correspondant au profil final extérieur de la préforme 1. Enfin, la figure 9 (b) présente une section droite de la zone de transition selon la coupe BB tel qu'indiqué à la figure 8. Dans ce cas, le profil axial est intermédiaire entre celui de la zone d'entrée et celui de la zone de sortie. On constate que le profil du côté de l'extrémité axiale 20 est déjà celui du profil de sortie alors que de l'autre côté, la transition n'est pas complète. De fait, l'évolution du profil axial de la surface d'application du patin 10 dans la zone de transition est d'autant plus rapide que l'on est proche de l'extrémité axiale 20 où est fixée initialement l'enroulement.

Le procédé selon l'invention est le suivant :
- enrouler une laize 7 autour d'une virole de diamètre extérieur égal à celui des extrémités axiales 20, 21 de la préforme 1 pour obtenir le nombre de couches de tissu nécessaires pour la préforme 1 à fabriquer ;
- les patins d'application 10 et de compactage 11 étant en position radialement écartée de la matrice de préformage 8, fixer l'enroulement de la laize 7 à une extrémité axiale de la matrice de préformage 8, par exemple l'extrémité 20 au moyen d'une frette ;
- mettre en rotation la matrice de préformage autour de l'axe YY' dans un sens tel que tout point de cette matrice se déplace contre la surface d'application du patin 10 de la zone d'entrée vers la zone de sortie ;
- déplacer radialement le patin d'application 10 pour qu'il vienne en appui contre l'enroulement de la laize 7 jusqu'à obtenir l'épaisseur finale de la préforme 1 ;
- déplacer radialement les patins de compactage jusqu'à ce qu'ils viennent en appui contre l'enroulement de la laize à une cote donnée ;
- arrêter la rotation de la matrice de préformage ;
- évacuer la préforme prête.

Ce sont les forces de frottement d'orientation circonférentielle entre le patin d'application 10 et la couche extérieure de l'enroulement qui entraînent un glissement progressif des fibres des différentes couches relativement aux fibres bloquées au niveau de l'extrémité axiale 20 de la matrice de préformage 8 jusqu'au blocage en position appliquée contre la matrice de préformage 8. Pour que les efforts de frottement soient bien circonférentiels, il est important que les vitesses de rotation de la matrice 8 et d'avance du patin d'application 10 soient synchronisées. En fait, il faut que lorsque le patin 10 arrive en butée contre l'enroulement, un nombre de tours minimum ait eu lieu. Ce nombre de tours doit obligatoirement être supérieur ou égal à 1, mais pour avoir une application correcte il peut être de l'ordre de dix. La vitesse de rotation de la matrice n'est pas un paramètre critique, une vitesse de l'ordre de quelques tours par seconde est tout à fait satisfaisante.

L'orientation α des fibres de chaîne 6 relativement à la direction axiale est préférentiellement, pour des structures classiques de fibres pré-assemblées, initialement comprise entre 65 et 80 degrés, cela correspond à des valeurs de ω entre 10 et 25 degrés.

Pour que le procédé soit applicable, il faut que les fibres selon l'orientation sensiblement circonférentielle, par exemple les fils de chaîne, soient enroulées hélicoïdalement sur la matrice de préformage et que les fils aient une extrémité fixée à l'un des crochets de jante et l'autre libre à l'autre crochet. Il est donc impossible de réaliser une application avec une valeur de alpha de 90 degrés. En revanche, avec des tissus très déformables, par exemple déséquilibrés 90/10 entre chaîne et trame, il est possible d'appliquer les fibres de chaîne avec des valeurs de alpha très proches de 90 degrés, 85 par exemple.

Le rapprochement radial du patin d'application 10 vers l'enroulement de la laize 7 va créer des efforts circonférentiels de frottement qui tendent à augmenter l'angle α des fibres de trame soit à rapprocher ces fibres de la direction circonférentielle. Ces efforts vont entraîner un déplacement circonférentiel progressif des couches de l'enroulement de la laize 7 jusqu'à ce que l'enroulement s'adapte au profil de la matrice de préformage 8. L'évolution progressive circonférentiellement et axialement des profils de la zone de transition du patin d'application 10 permet une mise en place elle aussi progressive de l'enroulement de la laize 7.

En fin de course du patin d'application 10, on rapproche radialement les patins de compactage pour stabiliser la préforme 1 dans la forme désirée.

Pour faciliter cette stabilisation, il est avantageux de compléter le dispositif d'application en lui incorporant des moyens de chauffage et de refroidissement de la matrice de préformage 8. Ces moyens peuvent notamment comprendre une source d'air chaud connectée au moins à un patin de compactage 11 tel que présenté à la figure 10. Ce patin est creux et est percé de trous radiaux 31. Des trous radiaux 32 correspondants sont aussi régulièrement percés dans la matrice de préformage 8. Le flux d'air chaud traverse l'espace compris entre le patin et la matrice de préformage, espace où se situe l'enroulement de la laize 7. Ce flux est ensuite évacué dans une canalisation 33 située dans l'axe de la matrice de préformage 8.

Les tissus utilisés doivent alors comprendre un liant thermoplastique de préformage. Après avoir mis en place l'enroulement de la laize 7 sur la matrice de préformage, on fait passer un flux d'air chaud à travers l'enroulement, ce flux va faire fondre le liant thermoplastique. On applique alors comme précédemment l'enroulement contre la matrice de préformage pendant que le liant est fondu. Lorsque l'application est achevée, on remplace le flux d'air chaud par un flux d'air froid pour refroidir la préforme 1, solidifier le liant de préformage et ainsi stabiliser la préforme fabriquée. La préforme peut alors être aisément manipulée sans se déformer.

Selon une variante du procédé selon l'invention, on réalise simultanément l'enroulement de la laize 7 de tissu autour de la matrice de préformage 8 et son application sur cette matrice 8 au moyen du patin 10.

On peut aussi, dans le cas où les épaisseurs de la préforme à fabriquer sont importantes, réaliser l'application de la laize en plusieurs opérations successives.

Trois exemples de mise en oeuvre du procédé de l'invention sont maintenant décrits en prenant comme tissu un sergé 2x2 de la société "Les Fils d'Auguste Chomarat et Cie", France, de référence AF43.0391 et dont les valeurs extrêmes de gamma sont respectivement 53 et 129 degrés. La préforme de jante correspond à une jante 6J15. La fibre utilisée est du verre.

Le tableau 1 suivant donne les résultats des angles *α*, β et γ mesurés après la fabrication de la préforme de jante en fonction des valeurs initiales de α.

**Tableau 1**

| **α/β initiaux (degrés)** | **70/20** | **75/15** | **80/10** |
|---|---|---|---|
| **Gamma origine** | 90 | 90 | 90 |
| Gamma mini | 68 | 55 | 40 |
| Gamma maxi | 105 | 90 | 90 |
| Variation gamma | 37 | 35 | 50 |
| **Alpha origine** | 60 | 75 | 80 |
| Alpha mini | 60 | 75 | 70 |
| Alpha maxi | 70 | 80 | 80 |
| Variation alpha | 10 | 5 | 10 |
| **Bêta origine** | 30 | 15 | 10 |
| Bêta mini | 0 | -20 | -40 |
| Bêta maxi | 30 | 15 | 10 |
| Variation bêta | 30 | 35 | 50 |

On constate dans les trois cas que la variation d'orientation des fibres de chaîne est très faible, ces fibres restent donc sensiblement dans leur orientation initiale. En revanche, les fibres de trame ont une forte variation liée à l'adaptation du tissu aux fortes variation de diamètre de la préforme. Dans le troisième cas seulement, les mesures faites semblent indiquer que l'on a imposé au tissu des déformations trop importantes (valeurs de γₘᵢₙᵢ mesurées inférieures à la limite de déformabilité du tissu). Cela a pu entraîner quelques difficultés d'application très locales.

Comme il l'a déjà été dit, dans le cas de jantes de roues, il est souhaitable de privilégier l'orientation la plus circonférentielle possible des fibres de renfort pour optimiser la résistance mécanique des jantes en fonctionnement. D'autre part, il est utile de disposer quelques fibres selon une orientation quasi-axiale pour obtenir une bonne résistance mécanique à l'éclatement sous pression.

Le procédé selon l'invention permet d'obtenir cette orientation sensiblement circonférentielle des fibres de trame. On peut aussi utiliser un tissu dont le rapport chaîne / trame est déséquilibré jusqu'à des proportions de 10 % en trame pour 90 % en chaîne et ainsi privilégier le renforcement circonférentiel. Une autre variante pour obtenir un tissu déséquilibré consiste à introduire une proportion donnée de fibres de carbone ou d'aramide en chaîne dans un tissu de verre.

Les préformes ainsi fabriquées, il reste à découper, si nécessaire, les extrémités des crochets avant et arrière pour garantir une excellente géométrie, puis à les placer dans un moule fermé, à injecter sous vide ou sous faible pression une résine thermodurcissable et à faire réticuler celle-ci pour obtenir une jante terminée.

Le procédé selon l'invention a été décrit pour la réalisation de préformes de jantes de roues de véhicules automobiles. Il peut aussi s'appliquer à la réalisation de préformes de pièces en matériau composite ayant un axe de révolution où l'orientation des fibres de renfort dans les directions axiales et circonférentielles est importante.

## Revendications

1. Procédé de fabrication d'une préforme (1) de pièce en matériau composite ayant un axe de révolution par mise en place de fibres (5, 6) pré-assemblées selon deux orientations définissant des mailles déformables sur une matrice de préformage (8) dans lequel :
- on enroule une laize (7) desdites fibres pré-assemblées autour d'une forme de révolution pour obtenir un enroulement avec un nombre de couches de fibres pré-assemblées donné ;
- on fixe ledit enroulement sur une circonférence de plus grand diamètre de la matrice de préformage de telle sorte que les fibres (5, 6) sont disposées relativement à l'orientation axiale selon une première orientation d'angle alpha et une seconde orientation d'angle bêta inférieur à alpha ; et
- on applique ledit enroulement progressivement jusqu'à couvrir la totalité de la surface de la matrice de préformage (8) en le soumettant à des tensions d'orientation sensiblement circonférentielle et de direction telle que lesdites tensions tendent à augmenter ledit angle alpha.

2. Procédé selon la revendication 1, dans lequel l'angle alpha est compris entre soixante-cinq et quatre-vingt-cinq degrés.

3. Procédé selon l'une des revendications 1 ou 2, dans lequel ladite laize (7) est obtenue par découpe en biais d'une structure (4) de fibres pré-assemblées, relativement aux directions des fibres de chaîne (6) ou de trame (5) de ladite structure.

4. Procédé selon l'une des revendications 1 à 3, dans lequel, l'enroulement est réalisé sur une virole cylindrique.

5. Procédé selon l'une des revendications 1 à 3, dans lequel, l'enroulement est réalisé directement sur la matrice de préformage (8).

6. Procédé selon l'une des revendications 1 à 5, dans lequel, après avoir appliqué l'enroulement sur la totalité de la matrice de préformage (8), on compacte ledit enroulement contre ladite matrice de préformage par application d'une pression radiale.

7. Procédé selon l'une des revendications 1 à 6, dans lequel, lesdites fibres pré-assemblées (5, 6) comportant un liant de préformage, on chauffe ledit enroulement avant ou pendant son application sur la matrice de préformage (8) pour faire fondre ledit liant de préformage.

8. Procédé selon la revendication 7, dans lequel, après avoir appliqué l'enroulement sur la matrice de préformage (8), on refroidit la préforme (1) obtenue pour solidifier le liant de préformage.

9. Procédé selon l'une des revendications 1 à 8, dans lequel les fibres pré-assemblées (5, 6) sont des fibres de verre avec, disposées dans la direction de chaîne, des fibres choisies dans le groupe des fibres de carbone et d'aramide.

10. Procédé selon l'une des revendications 1 à 9, dans lequel ladite pièce en matériau composite est une jante ou un élément de jante.

11. Dispositif de fabrication d'une préforme de pièce en matériau composite ayant un axe de révolution comprenant :
- une matrice de préformage (8) de profil extérieur de révolution correspondant au profil intérieur de ladite préforme (1) ;
- des moyens de fixation (24) sur une circonférence de plus grand diamètre de ladite matrice de préformage d'un enroulement d'un nombre de couches donné de fibres pré-assemblées selon deux orientations définissant des mailles déformables ;
- des moyens d'application (10, 13, 14, 15)) dudit enroulement en le soumettant à des tensions dans une direction sensiblement circonférentielle.

12. Dispositif selon la revendication 11, dans lequel les moyens d'application (10, 13, 14, 15, 16) dudit enroulement comprennent :
- un patin d'application (10) avec une surface d'application destinée à venir en contact avec l'enroulement sur un secteur donné, ladite surface d'application ayant une zone d'entrée avec un profil axial d'entrée dont le diamètre minimum est au moins supérieur au plus grand diamètre extérieur de ladite préforme, une zone de sortie avec un profil axial de sortie correspondant au profil final extérieur de ladite préforme et une zone de transition avec un profil axial évoluant progressivement circonférentiellement dudit profil axial d'entrée vers ledit profil axial de sortie ;
- des moyens de maintien et de mise en rotation relative (14, 15, 16) de la matrice de préformage et dudit patin d'application ; et
- des moyens de mise en appui (13) dudit patin d'application (10) contre ledit secteur dudit enroulement.

13. Dispositif selon la revendication 12, dans lequel l'évolution circonférentielle d'un profil circonférentiel de la zone de transition de la surface d'application du patin est d'autant plus rapide que ledit profil circonférentiel est axialement proche de la circonférence de plus grand diamètre où doit être fixé initialement l'enroulement.

14. Dispositif selon l'une des revendications 11 à 13, comportant en plus des moyens de compactage comprenant au moins un patin de compactage (11) dont la surface d'application contre l'enroulement a une géométrie correspondant au profil extérieur de ladite préforme et des moyens de mise en appui dudit patin de compactage contre la surface extérieure dudit enroulement.

15. Dispositif selon l'une des revendications 11 à 14, comportant en plus des moyens de chauffage et de refroidissement (31, 32, 33) de ladite matrice de préformage (8).

16. Dispositif selon la revendication 15, dans lequel les moyens de chauffage et de refroidissement de la matrice de préformage comprennent des moyens pour propulser de l'air chaud ou froid à travers au moins l'un des patins d'application et de compactage et la matrice de préformage en passant par des trous radiaux (31, 32) percés à cet effet dans ledit patin et ladite matrice de préformage.

17. Dispositif de fabrication selon l'une des revendications 11 à 16, dans lequel ladite pièce en matériau composite est une jante ou un élément de jante.

18. Procédé de fabrication d'une pièce en matériau composite ayant un axe de révolution dans lequel :
- on réalise au moins une préforme (1) selon l'une des revendications 1 à 10 ;
- on met en place dans un moule ladite préforme ;
- on transfère une résine à travers ladite préforme sous vide et/ou avec une pression de transfert ;
- on réticule ladite résine à au moins une température appropriée.

## Patentansprüche

1. Verfahren zur Herstellung einer Vorform (1) eines Stückes aus Verbundmaterial, das eine Rotationsachse aufweist, durch Anordnung von vorher zusammengefügten Fasern (5, 6) in zwei Orientierungen, die verformbare Maschen auf einer Vorform-Matrize (8) definieren, worin:
- man eine Bahn (7) der genannten, vorher zusammengefügten Fasern um eine Rotationsform herumwickelt, um einen Wickel mit einer vorgegebenen Anzahl von Lagen aus vorher zusammengesetzten Fasern zu erhalten;
- man den genannten Wickel auf einem Umfang mit größtem Durchmesser der Vorformmatrize derart befestigt, daß die Fasern (5, 6) relativ zur axialen Orientierung unter einer ersten Orientierung mit dem Winkel Alpha und einer zweiten Orientierung mit dem Winkel Beta angeordnet sind, der kleiner ist als Alpha; und
- man den genannten Wickel fortlaufend aufträgt, bis man die Gesamtheit der Oberfläche der Vorformmatrize (8) bedeckt, indem man ihn Spannungen mit einer Orientierung im wesentlichen in Umfangsrichtung und mit einer derartigen Richtung unterzieht, daß die genannten Spannungen danach trachten, den genannten Winkel Alpha zu vergrößern.

2. Verfahren nach Anspruch 1, worin der Winkel Alpha zwischen fünfundsechzig und fünfundachzig Grad liegt.

3. Verfahren nach einem der Ansprüche 1 oder 2, worin die genannte Bahn (7) durch schräges Abschneiden einer Struktur (4) aus vorher zusammengefügten Fasern relativ zu den Richtungen der Kettfäden (6) oder Schußfäden (5) der genannten Struktur erhalten wird.

4. Verfahren nach einem der Ansprüche 1 bis 3, worin der Wickel auf einem zylindrischen Mantelbzw. Ring hergestellt wird.

5. Verfahren nach einem der Ansprüche 1 bis 3, worin der Wickel unmittelbar auf der Vorformmatrize (8) hergestellt wird.

6. Verfahren nach einem der Ansprüche 1 bis 5, worin man, nachdem man dem Wickel auf der Gesamtheit der Vorformmatrize (8) aufgebracht hat, den genannten Wickel gegen die Vorformmatrize hin durch Aufbringen eines radialen Drucks verdichtet.

7. Verfahren nach einem der Ansprüche 1 bis 6, worin die genannten, vorher zusammengesetzten Fasern (5, 6) einen Vorformbinder aufweisen, und man den genannten Wickel vor oder während seines Auftrags auf die Vorformmatrize (8) erwärmt, um den genannten Vorformbinder schmelzen zu lassen.

8. Verfahren nach Anspruch 7, worin man, nachdem man den Wickel auf die Vorformmatrize (8) aufgebracht hat, die erhaltene Vorform (1) abkühlt, um den Vorformbinder zu verfestigen.

9. Verfahren nach einem der Ansprüche 1 bis 8, worin die vorher zusammengefügten Fasern (5, 6) Glasfasern sind, mit in Kettrichtung angeordneten Fasern, die aus der Gruppe der Kohlenstoff- oder Aramidfasern ausgewählt sind.

10. Verfahren nach einem der Ansprüche 1 bis 9, worin das genannte Stück aus Verbundmaterial eine Felge oder ein Felgenelement ist.

11. Vorrichtung zur Herstellung einer Vorform für ein Verbundmaterialstück, das eine Rotationsaches besitzt, mit:
- einer Vorformmatrize (8) mit einem rotationsförmigen Außenprofil, das dem Innenprofil der genannten Vorform (1) entspricht;
- Mitteln (24) zur Befestigung eines Wickels aus einer vorgebenen Zahl von Lagen vorher zusammengefügter Fasern auf einem Umfang mit größerem Durchmesser der genannten Vorformmatrize in zwei Orientierungen, die deformierbare Maschen definieren; und
- Mitteln (10, 13, 14, 15) zur Aufbringung des genannten Wickels, indem man ihn Spannungen in einer im wesentlichen in Umfangsrichtung erfolgenden Richtung unterzieht.

12. Vorrichtung nach Anspruch 11, worin die Mittel (10, 13, 14, 15, 16) zur Aufbringung des Wickels die folgenden Merkmale aufweisen:
- eine Auftragekufe (10) mit einer Auftrage-Oberfläche, die dazu bestimmt ist, mit dem Wickel über einen vorgegebenen Sektor in Berührung zu gelangen, wobei die genannte Auftrage-Oberfläche eine Einlaufzone mit einem axialen Einlaufprofil, dessen kleinster Durchmesser mindestens größer ist als der größte Außendurchmesser der genannten Vorform, eine Auslaufzone mit einem axialen Auslaufprofil, das dem endgültigen Außenprofil der genannten Vorform entspricht, und eine Übergangszone mit einem axialen Profil aufweist, das im Umfangs allmählich vom genannten, axialen Einlaufprofil zum genannten axialen Auslaufprofil übergeht;
- Mittel (14, 15, 16), um die Vorformmatrize und die genannte Auftragekufe zu halten und in relative Drehung zu versetzen; und
- Mittel (13), um die genannte Auftragekufe (10) gegen den genannten Sektor des genannten Wickels in Auflage zu versetzen.

13. Vorrichtung nach Anspruch 12, worin der Umfangs-Übergang von der Übergangszone der Auftragefläche der Kufe umso rascher erfolgt, je größer die axiale Nähe des genannten Profils zum Umfang mit größtem Durchmesser ist, wo der Wickel anfangs befestigt werden muß.

14. Vorrichtung nach einem der Ansprüche 11 bis 13, zudem mit Mitteln zum Verdichten, die mindestens eine Verdichtungskufe (11) aufweisen, deren Anlagefläche gegen den Wickel eine Geometrie hat, die der Außenoberfläche der genannten Vorform entspricht, sowie Mitteln zum Andrücken der genannten Verdichtungskufe gegen die Außenoberfläche des genannten Wickels.

15. Vorrichtung nach einem der Ansprüche 11 bis 14, zudem mit Mitteln zur Erwärmung und zur Kühlung (31, 32, 33) der genannten Vorformmatrize (8).

16. Vorrichtung nach Anspruch 15, worin die Mittel zur Erwärmung und zur Kühlung der genannten Vorformmatrize Mittel zum zum Hindurchtreiben von Warm- oder Kaltluft durch mindestens eine der Kufen zum Auftragen und Verdichten und der Vorformmatrize aufweisen, indem sie durch radiale Bohrungen bzw. Löcher (31, 32) hindurchtritt, die zu diesem Zweck in die genannte Kufe und die genannte Vorform-matrize gebohrt bzw. eingebracht sind.

17. Vorrichtung zur Herstellung nach einem der Ansprüche 11 bis 16, worin das genannte Stück aus Verbundmaterial eine Felge oder ein Felgenelement ist.

18. Verfahren zur Herstellung eines Stücks aus Verbundmaterial, das eine Drehachse hat, worin:
- man mindestens eine Vorform (1) nach einem der Ansprüche 1 bis 10 herstellt;
- man die Vorform in eine Form setzt;
- man ein Harz unter Vakuum und/oder Übertragungsdruck durch die genannte Vorform hindurch überträgt; und
- man das genannte Harz bei mindestens einer geeigneten Temperatur vernetzt.

## Claims

1. A process for manufacturing a preform (1) for a part of composite material having an axis of revolution by putting in place fibres (5, 6) which are pre-assembled in two orientations defining deformable meshes on a preforming die (8) in which:
- a fabric width (7) of said pre-assembled fibres is wound around a form of revolution to obtain a winding with a given number of layers of pre-assembled fibres;
- said winding is fastened on a circumference of greater diameter of the preforming die such that the fibres (5, 6) are arranged relative to the axial orientation at a first orientation of angle alpha and a second orientation of angle beta which is less than alpha; and
- said winding is applied gradually until the entire surface of the preforming die (8) is covered by subjecting it to tensions of substantially circumferential orientation and of direction such that said tensions tend to increase said angle alpha.

2. A process according to Claim 1, in which the angle alpha is between sixtyfive and eighty-five degrees.

3. A process according to one of Claims 1 or 2, in which said fabric width (7) is obtained by cutting out a structure (4) of pre-assembled fibres on the bias relative to the directions of the warp (6) or weft (5) fibres of said structure.

4. A process according to one of Claims 1 to 3, in which the winding is effected on a cylindrical ring.

5. A process according to one of Claims 1 to 3, in which the winding is effected directly on the preforming die (8).

6. A process according to one of Claims 1 to 5, in which, having applied the winding to the entire preforming die (8), said winding is compacted against said preforming die by applying radial pressure.

7. A process according to one of Claims 1 to 6, in which, said pre-assembled fibres (5, 6) comprising a preforming binder, said winding is heated before or during its application to the preforming die (8) to melt said preforming binder.

8. A process according to Claim 7, in which, having applied the winding to the preforming die (8), the preform (1) obtained is cooled to solidify the preforming binder.

9. A process according to one of Claims 1 to 8, in which the pre-assembled fibres (5, 6) are glass fibres with, arranged in the warp direction, fibres selected from the group of carbon and aramid fibres.

10. A process according to one of Claims 1 to 9, in which said part of composite material is a rim or a rim element.

11. A device for manufacturing a preform of a part of composite material having an axis of revolution, comprising:
- a preforming die (8) of external profile of revolution corresponding to the internal profile of said preform (1);
- means for fastening (24) on a circumference of greater diameter of said preforming die a winding of a given number of layers of fibres which are pre-assembled in two orientations defining deformable meshes;
- means (10, 13, 14, 15) for applying said winding by subjecting it to tensions in a substantially circumferential direction.

12. A device according to Claim 11, in which the means (10, 13, 14, 15, 16) for applying said winding comprise:
- an application shoe (10) with an application surface which is intended to come into contact with the winding over a given sector, said application surface having an entry zone with an axial entry profile the minimum diameter of which is at least greater than the largest external diameter of said preform, an exit zone with an axial exit profile corresponding to the final outer profile of said preform and a transition zone with an axial profile which gradually evolves circumferentially from said axial entry profile towards said axial exit profile;
- means (14, 15, 16) for holding and for relative rotation of the preforming die and of said application shoe; and
- means (13) for placing said application shoe (10) in a support configuration against said sector of said winding.

13. A device according to Claim 12, in which the circumferential evolution of a circumferential profile of the transition zone of the application surface of the shoe is all the faster the more said circumferential profile is axially close to the circumference of greater diameter where the winding has to be initially fastened.

14. A device according to one of Claims 11 to 13, furthermore comprising compacting means comprising at least one compacting shoe (11), the surface for application against the winding of which has a geometry which corresponds to the external profile of said preform, and means for placing said compacting shoe in a support configuration against the outer surface of said winding.

15. A device according to one of Claims 11 to 14, furthermore comprising means (31, 32, 33) for heating and cooling said preforming die (8).

16. A device according to Claim 15, in which the heating and cooling means for the preforming die comprise means for propelling hot or cold air across at least one of the application and compacting shoes and the preforming die, passing through radial holes (31, 32) formed for this purpose in said shoe and said preforming die.

17. A manufacturing device according to one of Claims 11 to 16, in which said part of composite material is a rim or a rim element.

18. A process for manufacturing a part of composite material having an axis of revolution, in which:
- at least one preform (1) is produced in accordance with one of Claims 1 to 10;
- said preform is put in place in a mould;
- a resin is transferred through said preform under vacuum and/or with a transfer pressure;
- said resin is cross-linked at at least one suitable temperature.
